# EUROPEAN PATENT SPECIFICATION

(11) **EP 3 994 377 B1**
(45) Date of publication and mention of the grant of the patent: **06.03.2024**
(21) Application number: 19801372.4
(22) Date of filing: 14.11.2019
(51) Int. Cl.: F16K 11/078

(54) **MIXING CARTRIDGE FOR FAUCETS**
MISCHKARTUSCHE FÜR HÄHNE
CARTOUCHE DE MÉLANGE POUR ROBINETS

(30) Priority: 01.07.2019 IT 201900010530
(43) Date of publication of application: 11.05.2022
(73) Proprietor: Carlo Nobili S.p.A. - Rubinetterie, 28021 Borgomanero (IT)
(72) Inventor: NOBILI, Alberto, 28021 Borgomanero (IT)
(74) Representative: Modiano, Micaela Nadia
(86) International application number: PCT/EP2019/081397
(87) International publication number: WO 2021/001053

(56) References cited:
- DE-A1- 3 518 698
- US-A- 3 023 784
- US-A- 3 324 884
- US-A- 3 661 180
- US-A1- 2018 223 508

## Description

The present invention relates to a mixing cartridge for faucets, in particular for single-lever mixing faucets.

Mixing cartridges are known for single-lever mixing faucets, which usually comprise a substantially cylindrical enclosure inside which water is mixed that originates from two conduits, one carrying hot water and the other carrying cold water.

Generally the enclosure accommodates a base disc, made of ceramic material, which is arranged proximate to one of the end faces of the enclosure and is passed through by two intake ports, respectively an intake port for cold water and an intake port for hot water, which lead into a mixing chamber which is in turn connected with an outlet port which can be connected with the dispensing outlet of the faucet.

The quantity of water entering the cartridge and the proportion of hot and cold water are generally controlled by way of a mixing disk which is arranged above the base disc and can move with respect to this. The mixing disk, by moving with respect to the base disc, varies the passage cross-sections of the intake ports.

In the background art, movement of the mixing disk is guided by a kinematic mechanism, which usually comprises a lever, which is basically contained in the mixing chamber or in the conduit through which the mixed water reaches the dispensing port. This kinematic mechanism is connected to the adjustment lever of the faucet so that by moving this it is possible to adjust quantity and temperature of the water exiting from the faucet.

A particularly functional example of this type of mixing cartridge is described by Italian patent no. 0001340250 in the name of the same Applicant.

In this mixing cartridge, the mixing disk is slideably coupled to the base disc, with a face on a coupling surface that is perpendicular to the longitudinal axis of the cylindrical enclosure. In more detail, the mixing disk comprises a mixing port which conveniently is superimposed on the intake ports that are present on the base disc, and which can translate, relative to the base disc, along the above mentioned coupling surface in order to vary the degree of opening of the intake ports, and furthermore it can rotate about an axis that is perpendicular to the coupling surface in order to vary the ratio between the degrees of opening of the two intake ports.

Also in this conventional cartridge, the movements of the mixing disk are guided with a lever which is accommodated in the exit duct, which also acts as a mixing chamber, and is pivoted to the cylindrical enclosure about a pivoting axis parallel to the above mentioned coupling surface and is connected with one end to the mixing disk, rotatably engaging a seat defined on the opposite face of the mixing disk with respect to the base disc. The lever, by rotating about the pivoting axis, guides the translation of the mixing disk with respect to the base disc and, by rotating about the longitudinal axis of the enclosure, guides the rotation of the mixing disk with respect to the base disc. This lever is usually connected to the adjustment lever of the faucet, so that it can be actuated by the user in order to adjust the temperature and flow of the water dispensed.

US 3,324,884 discloses another known mixing cartridge for faucets according to the preamble of claim 1.

These mixing cartridges, although useful and practical, have a number of drawbacks and aspects that show room for improvement, which include the fact that these conventional mixing cartridges have shown some limitations in terms of reliability over time.

In particular, sometimes, following a protracted use over time, an unwanted hardening arises of the movement of the mixing disk, which in some cases causes the breakage of the actuation means by the user.

Sometimes, again following a protracted use over time, water leaks from the cartridge develop.

The aim of the present invention is to overcome the above mentioned drawbacks of the known art, by devising a mixing cartridge for faucets that is more reliable and longer-lasting with respect to the known art.

Within this aim, an object of the present invention is to provide a mixing cartridge for faucets that prevents the onset of hardening in the adjustment mechanisms.

Another object of the invention consists of providing a mixing cartridge for faucets that diminishes the onset of water leaks.

Another object of the invention consists of providing a mixing cartridge for faucets that is easy to implement and economically competitive when compared to the known art.

This aim and these and other objects which will become better apparent hereinafter are achieved by a mixing cartridge for faucets that comprises:
- a containment enclosure;
- a hot water inlet and a cold water inlet, both located on a first end face of said containment enclosure and both leading into a mixing chamber;
- a dispensing outlet, which is in fluid communication with said mixing chamber and is arranged on a second end face of said containment enclosure which is opposite with respect to said first end face;
- a base disc interposed between said inlets and said mixing chamber and comprising a pair of intake ports, each one of which establishes a fluid communication between one of said inlets and said mixing chamber;
- an adjustment element which is superimposed on said base disc and can move with respect to said base disc so that by moving with respect to said base disc the degree of opening of said intake ports is varied;
- a kinematic actuation mechanism connected mechanically to said adjustment element, which can be connected to a lever for adjusting the faucet and is configured to guide the movement of said adjustment element with respect to said base disc;

characterized in that said mixing chamber is defined between said adjustment element and said base disc,
and in that said kinematic actuation mechanism is accommodated above said mixing chamber, in a dry chamber which is hermetically isolated from said mixing chamber and from said inlets and from said dispensing outlet, said mixing chamber being in fluid communication with said dispensing outlet via at least one duct for the outflow of the mixed water, which is internal to said containment enclosure and external to said dry chamber, so that the water does not come into contact with said kinematic actuation mechanism.

Further characteristics and advantages of the invention will become better apparent from the detailed description of a preferred, but not exclusive, embodiment of a mixing cartridge for faucets, which is illustrated by way of non-limiting example with the aid of the accompanying drawings, wherein:
Figure 1 is a side view of a possible embodiment of a mixing cartridge according to the invention;
Figure 2 is a plan view from below of the mixing cartridge in Figure 1;
Figure 3 is a cross-sectional view taken along the vertical plane III-III of the cartridge in Figure 1;
Figure 4 is a cross-sectional view taken along the vertical plane IV-IV of the cartridge in Figures 1 and 2.

In order to facilitate comprehension, the arrows in the figures indicate the path of the water flows during operation.

With reference to the figures, the mixing cartridge for faucets and particularly for single-lever mixing faucets according to the invention, generally designated by the reference numeral 1, comprises a containment enclosure 20 which, in the preferred embodiments, is substantially cylindrical and extends therefore along a longitudinal axis.

Accommodated inside the containment enclosure 20 are all the elements which will be described below.

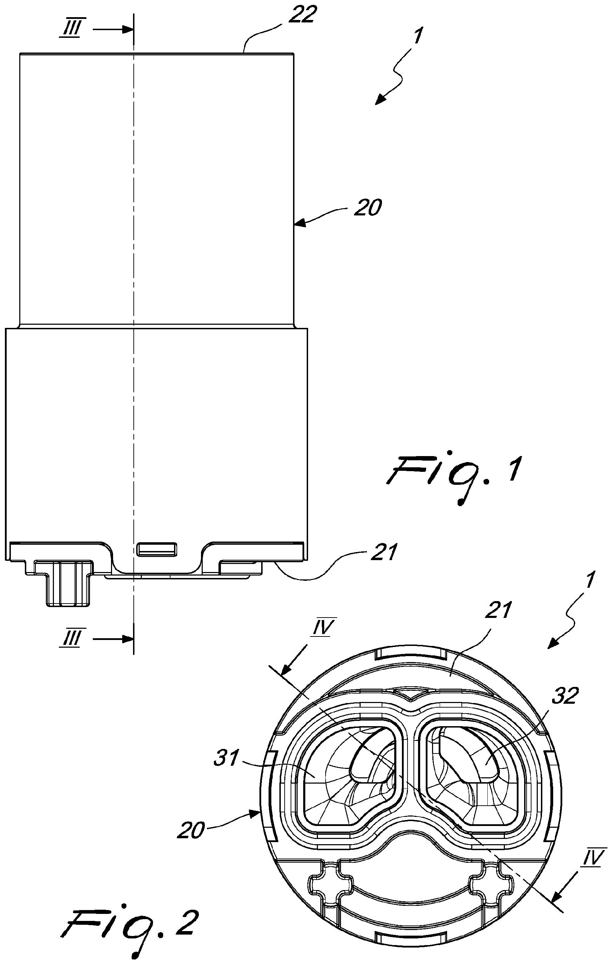

The mixing cartridge 1 is adapted to be installed, in a known manner, inside a mixer faucet, preferably, but not necessarily, with the longitudinal axis arranged vertically; therefore, for the sake of brevity, in the present description and in the accompanying claims, in indicating the reciprocal position of the various elements, reference will be made to the condition in which the mixing cartridge 1 is arranged with the longitudinal axis in the vertical position, as in Figures 1, 3 and 4.

Similarly to the background art, the mixing cartridge 1 comprises a hot water inlet 31 which is adapted to be connected to a hot water feeder conduit, and a cold water inlet 32 which is adapted to be connected to a cold water feeder conduit.

Both the hot water inlet 31 and the cold water inlet 32 are located on a first end face 21 of the containment enclosure 20, and more precisely on the lower end face, and both lead into a mixing chamber 40, in which, in practice, the hot water originating from the hot water inlet 31 and the cold water originating from the cold water inlet 32 come into contact and mix.

Very generally, the mixing chamber 40 should be understood to be like any volume, of any shape and size, in which hot water and cold water merge.

The mixing cartridge 1 also comprises a dispensing outlet 33 which is in fluid communication with the aforementioned mixing chamber 40 and is arranged on a second end face 22 of the containment enclosure 20 which is opposite with respect to the first end face 21 (i.e. on the upper end face). The dispensing outlet is adapted to be connected to a dispensing outlet of the faucet in the body of which the mixing cartridge 1 is mounted.

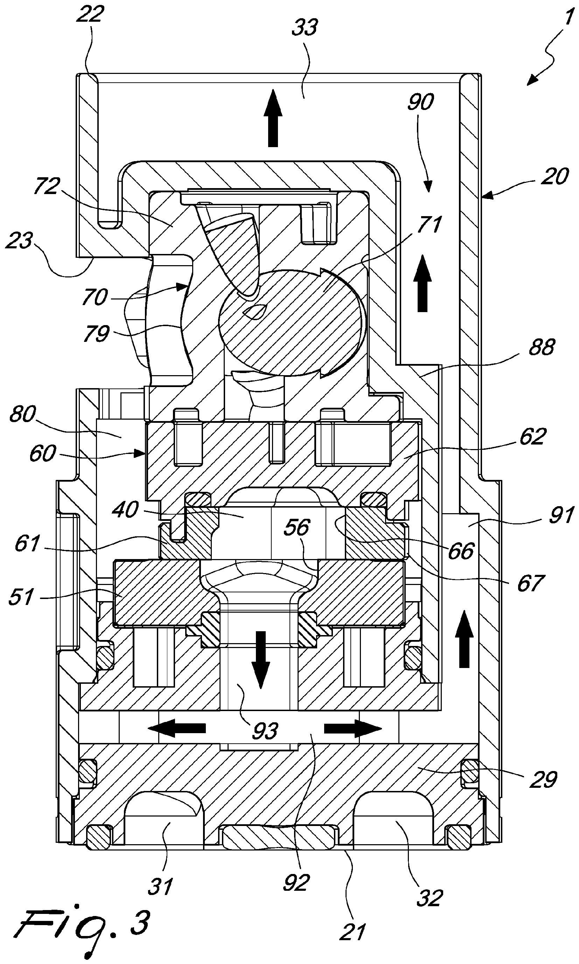

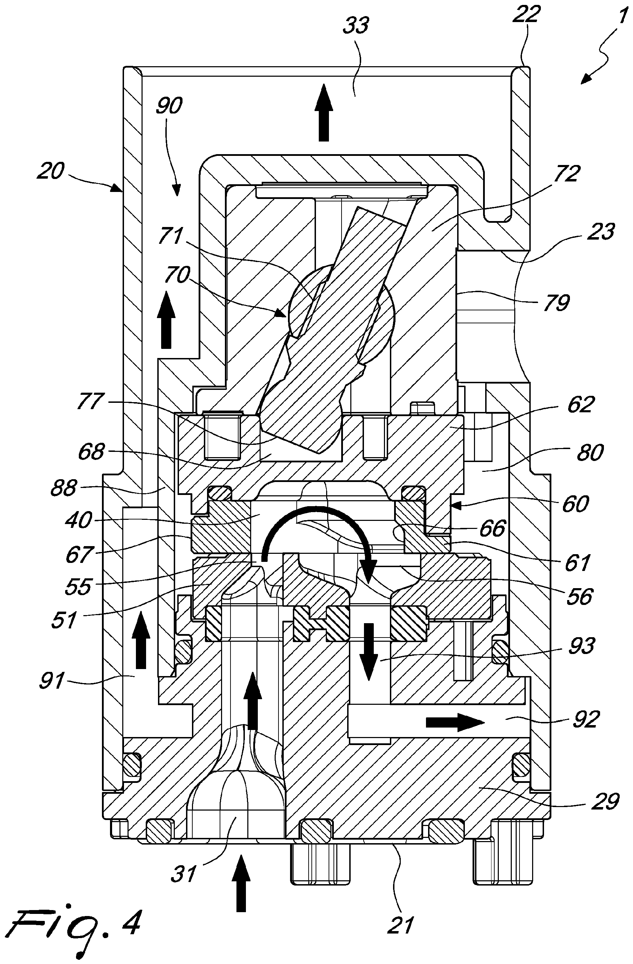

As shown by Figures 3 and 4, a base disc 51 is interposed between the two inlets 31, 32 and the mixing chamber 40 and comprises a pair of intake ports 55 (in the figures, only one of these is visible, in Figure 4) each one of which establishes a fluid communication between one of the inlets 31, 32 and the mixing chamber 40. In other words, each one of the intake ports 55 (which in practice are constituted by openings provided in the base disc 51) is arranged at a respective inlet 31, 32 so as to permit the passage of cold water and hot water from the respective inlet 31, 32 to the mixing chamber 40.

The base disc 51 is preferably made from or covered with ceramic material.

In the preferred embodiments, the base disc 51, in addition to the intake ports 55, also comprises an outlet port 56 for the outflow of the mixed water from the mixing chamber 40. In practice, this outlet port 56 connects the mixing chamber 40 with at least one duct for the outflow of the mixed water 90, which will be better described below.

The mixing cartridge 1 further comprises an adjustment element 60 which is superimposed on the base disc 51 and can move with respect thereto, so that such adjustment element 60 by moving with respect to the base disc 51 varies the degree of opening of the two intake ports 55, in so doing way varying the ratio between hot water and cold water flowing in and therefore, ultimately, the temperature of the mixed water.

In the preferred embodiments, the adjustment element 60 is a disk or the like which preferably is at least partially made from or covered with ceramic material.

The adjustment element 60 is moved by way of a kinematic actuation mechanism 70 which is mechanically connected to the adjustment element 60 and can be connected to an adjustment lever of the faucet in which the cartridge 1 is installed.

The kinematic actuation mechanism 70 is therefore configured to guide the movement of the adjustment element 60 with respect to the base disc 51.

The term "kinematic actuation mechanism 70" means any mechanical element, or set of mechanical elements, conventional, that are adapted to provide a system of kinematic transmission from an adjustment lever of the faucet to the adjustment element 60, therefore the kinematic actuation mechanism 70 can comprise any kinematic transmission element, or set of such elements, chosen from among those known in the art. A preferred embodiment of the kinematic actuation mechanism 70 will be described below.

According to the invention, the mixing chamber 40 is defined between the adjustment element 60 and the base disc 51, such as for example can be seen from Figures 3 and 4 which show that an internal wall 66 of the adjustment element 60 effectively constitutes the internal wall of the mixing chamber 40. Note that the mixing chamber 40 is delimited in a downward region by the base disc 51.

Also according to the invention, the kinematic actuation mechanism 70 is accommodated above the mixing chamber 40 in a dry chamber 80 which is hermetically isolated, i.e. sealed against water or other liquids, from the mixing chamber 40 and from the inlets 31, 32 and also from the dispensing outlet 33.

Note that in the embodiment shown, the dry chamber 80 is separated from the mixing chamber 40 by the adjustment element 60.

The dry chamber 80 is defined here as dry in the sense that is constituted by a space to which the water does not have access (neither the incoming cold and hot water nor the outgoing mixed water).

To this end, the mixing chamber 40 is placed in fluid communication (i.e. it is hydraulically connected) with the dispensing outlet 33 via at least one duct for the outflow of the mixed water 90, which is internal to the containment enclosure 20 and external to the dry chamber 80, so that the water never comes into contact with the kinematic actuation mechanism 70.

In this manner, all the drawbacks that arise from contact between the water and the kinematic actuation mechanism 70 and from any stagnation of water are avoided, such as the deposit of limescale and sedimentation of debris contained in the water and the removal of lubricant by the action of the water.

In the preferred embodiments, the dry chamber 80 is at least partially surrounded by a watertight wall 88 which protects the actuation mechanism 70 from the water, and preferably also the adjustment element 60 and even more preferably, as in the example shown, also the base disc 51.

Advantageously, in some embodiments, the base disc 51 is accommodated inside the dry chamber 80 so that at least one external wall of the base disc 51 does not come into contact with the water.

In more detail, in some embodiments, including the one shown, the mixing chamber 40 is defined by an internal wall 66 of the adjustment element 60, which separates the mixing chamber 40 from the dry chamber 80.

In even more detail, in the preferred and illustrated embodiment, the adjustment element 60 can move inside the dry chamber 80 so that at least one external wall 67 of such adjustment element 60 does not come into contact with the water.

Referring now in more detail to the adjustment element 60, this preferably comprises a lower disc 61 and an upper disc 62 which are mutually rigidly coupled so as to form a single element.

The lower disc 61 is adjacent to the base disc 51 and can slide on it and circumferentially delimits the mixing chamber 40.

The upper disc 62 is fixed to the lower disc 61, above it, and in an upper region delimits the mixing chamber 40.

Conveniently, the adjustment element 60 comprises a connection seat 68, on an upper wall thereof, which is directed outward with respect to the mixing chamber 40 (i.e. which faces outward onto the dry chambers 80), and which is engaged by an end 77 of the kinematic actuation mechanism 70.

In the embodiment shown, in which the adjustment element 60 comprises a lower disc 61 and an upper disc 62, the connection seat 68 is provided in an upper wall of the upper disc 62.

In practice the adjustment element 60 is provided with a central cavity that acts as the mixing chamber 40, which, by modifying its alignment with respect to the intake ports 55 and the outlet port 56 of the base disc 51, varies the degree of opening of these.

Preferably, the duct for the outflow of the mixed water 90 comprises at least one longitudinal branch 91 (which preferably extends parallel to the longitudinal axis of the cartridge 1) which is defined between an internal wall of the containment enclosure 20 and an external wall of the dry chamber 80 (and therefore preferably an outer face of the watertight wall 88).

Optionally, the duct for the outflow of the mixed water 90 comprises at least one transverse branch 92; in some embodiments, the longitudinal branch 91 is connected to the transverse branch 92, which in turn is connected to the outlet port 56 of the base disc 51 via a second, internal transverse branch 93.

Conveniently, the mixing cartridge 1 comprises a lower closure element 29 which is arranged below the base disc 51 and is fixed to the containment enclosure 20 so as to hermetically seal it in a downward region.

In more detail, in the preferred and illustrated embodiment, the transverse branch 91 of the duct for the outflow of the mixed water 90 is defined inside the lower closure element 29; the inlets 31, 32 are conveniently provided on the lower face of the lower closure element 29 and are connected to the intake ports 55 by way of respective ducts which are provided inside the lower closure element 29.

Turning now to some possible embodiments of the kinematic actuation mechanism 70, this preferably comprises a lever 71 which is pivoted inside the dry chamber 80 so that it can rotate about two mutually perpendicular axes. In the example shown, the lever 71 has a central, rotatable bulb accommodated in an adapted cavity, which acts as a fulcrum.

Even more preferably, the kinematic actuation mechanism 70 also comprises a connecting element 72 which is coupled to the lever 71 so as to entrain it in rotation.

This connecting element 72 faces outward, with a connecting portion 79, from a window 23 of the containment enclosure 20. The connecting portion 79 is adapted to be connected to an external adjustment lever of a faucet in which the mixing cartridge 1 is installed; to this end the connecting portion 79 is provided for example with a threaded seat or with other mechanical connecting elements.

Operation of the mixing cartridge 1 is clear and evident from the foregoing description.

It is evident from the figures that the hot water and the cold water coming from the respective inlet 31, 32 comes together in the mixing chamber 40, where it mixes, and from there, through the duct for the outflow of the mixed water, it reaches the dispensing outlet 33. By moving the adjustment element 60 by way of the kinematic actuation mechanism 70, it is possible to adjust the ratio between the hot water and the cold water and the stream of water dispensed.

Note that the solution described avoids contact between the water and the kinematic actuation mechanism 70 and the stagnation of water in the vicinity of the adjustment element 60; this prevents the deposit of limescale and the sedimentation of debris contained in the water and the removal of lubricant by the action of the water, which the Applicant has identified as the main cause of hardening and of malfunctions in conventional cartridges.

Furthermore the structure of the mixing cartridge 1 according to the invention has fewer sealing points than in the background art, in particular in the actuation means, and therefore it reduces the possibility of leaks.

In practice it has been found that the mixing cartridge, according to the present invention, achieves the intended aim and objects in that it is more reliable and long-lasting with respect to the known art.

Another advantage of the mixing cartridge, according to the invention, consists in that it prevents the onset of hardening in adjustment mechanisms.

Another advantage of the mixing cartridge, according to the invention, consists in that it diminishes the onset of water leaks.

Another advantage of the mixing cartridge, according to the invention, consists in that it is easy to implement and economically competitive when compared to the known art.

Another advantage of the mixing cartridge consists in that the water in the exit duct is not in contact with the body of the faucet and can be further channeled into additional ducts made of specific materials so as to meet the requirements of any certification body the contact of materials with potable water.

The mixing cartridge thus conceived is susceptible of numerous modifications and variations, all of which are within the scope of the appended claims.

Moreover, all the details may be substituted by other, technically equivalent elements.

In practice the materials employed, and the contingent shapes and dimensions, may be any according to requirements and to the state of the art.

This application claims priority of Italian Patent Application No. 102019000010530.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A mixing cartridge (1) for faucets which comprises:
- a containment enclosure (20);
- a hot water inlet (31) and a cold water inlet (32), both located on a first end face (21) of said containment enclosure (20) and both leading into a mixing chamber (40);
- a dispensing outlet (33), which is in fluid communication with said mixing chamber (40) and is arranged on a second end face (22) of said containment enclosure (20) which is opposite with respect to said first end face (21);
- a base disc (51) interposed between said inlets (31, 32) and said mixing chamber (40) and comprising a pair of intake ports (55), each one of which establishes a fluid communication between one of said inlets (31, 32) and said mixing chamber (40);
- an adjustment element (60) which is superimposed on said base disc (51) and can move with respect to said base disc (51) so that by moving with respect to said base disc (51) the degree of opening of said intake ports (55) is varied;
- a kinematic actuation mechanism (70) connected mechanically to said adjustment element (60), which can be connected to a lever for adjusting the faucet and is configured to guide the movement of said adjustment element (60) with respect to said base disc (51);
said mixing chamber (40) being defined between said adjustment element (60) and said base disc (51),
said kinematic actuation mechanism (70) being accommodated above said adjustment element (60) in a dry chamber (80) which is hermetically isolated from said mixing chamber (40) and from said inlets (31, 32) and from said dispensing outlet (33), said mixing chamber (40) being in fluid communication with said dispensing outlet (33) via at least one duct for the outflow of mixed water (90), which is internal to said containment enclosure (20) and external to said dry chamber (80), so that the water does not come into contact with said kinematic actuation mechanism (70),
**characterized in that**
said kinematic actuation mechanism (70) is accommodated above said adjustment element (60) along the direction of the dispensing outlet (33), said adjustment element (60) comprising:
- a lower disc (61), which is adjacent to said base disc (51) and can slide on it and circumferentially delimits said mixing chamber (40), and
- an upper disc (62), which is fixed to said lower disc (61), above it, and in an upper region delimits said mixing chamber (40), said dry chamber (80) being at least partially surrounded by a watertight wall (88) which protects the actuation mechanism (70) from water and also the adjustment element (60) and the base disc (51).

2. The mixing cartridge (1) according to claim 1, **characterized in that** said mixing chamber (40) is defined by an internal wall (66) of said adjustment element (60) which separates said mixing chamber (40) from said dry chamber (80); said adjustment element (60) being movable inside said dry chamber (80) so that at least one external wall (67) of said adjustment element (60) does not come into contact with the water.

3. The mixing cartridge (1) according to claim 1 or 2, **characterized in that** said base disc (51) is accommodated inside said dry chamber (80) so that at least one external wall of said base disc (51) does not come into contact with the water.

4. The mixing cartridge (1) according to one or more of the preceding claims, **characterized in that** said adjustment element (60) comprises a connection seat (68) which is engaged by an end (77) of said kinematic actuation mechanism (70).

5. The mixing cartridge (1) according to one or more of the preceding claims, **characterized in that** said base disc (51) comprises an outlet port (56) for the outflow of mixed water from the mixing chamber (40), which connects said mixing chamber (40) with said at least one duct for the outflow of the mixed water (90).

6. The mixing cartridge (1) according to one or more of the preceding claims, **characterized in that** said at least one duct for the outflow of mixed water (90) comprises at least one longitudinal branch (91) which is defined between an internal wall of said containment enclosure (20) and an external wall of said dry chamber (80).

7. The mixing cartridge (1) according to one or more of the preceding claims, **characterized in that** said at least one duct for the outflow of the mixed water (90) comprises at least one transverse branch (92) which is defined inside a lower closure element (29) which is located below said base disc (51).

8. The mixing cartridge (1) according to one or more of the preceding claims, **characterized in that** said kinematic actuation mechanism (70) comprises a lever (71) which is pivoted inside said dry chamber (80) so that it can rotate about two mutually perpendicular axes.

9. The mixing cartridge (1) according to claim 8, **characterized in that** said kinematic actuation mechanism (70) also comprises a connecting element (72) which is coupled to said lever (71) so as to entrain it in rotation, said connecting element (72) facing outward, with a connecting portion (79), from a window (23) of said containment enclosure (20); said connecting portion (79) being adapted to be connected to an external adjustment lever of a faucet.

## Patentansprüche

1. Eine Mischkartusche (1) für Wasserhähne, die Folgendes umfasst:
- ein Aufnahmegehäuse (20),
- einen Heißwassereinlass (31) und einen Kaltwassereinlass (32), beide positioniert an einer ersten Stirnseite (21) des Aufnahmegehäuses (20), die beide in eine Mischkammer (40) führen;
- einen Abgabeauslass (33), der in Fluidaustausch mit der Mischkammer (40) steht und an einer zweiten Stirnseite (22) des Aufnahmegehäuses (20) angeordnet ist, die der ersten Stirnseite (21) gegenüberliegt;
- eine Basisscheibe (51), angeordnet zwischen den Einlässen (31, 32) und der Mischkammer (40), die ein Paar von Einlassöffnungen (55) umfasst, von denen jede einen Fluidaustausch zwischen einem der Einlässe (31, 32) und der Mischkammer (40) herstellt;
- ein Einstellelement (60), das auf die Basisscheibe (51) gelegt ist und sich mit Bezug auf die Basisscheibe (51) bewegen kann, so dass durch Bewegung mit Bezug auf die Basisscheibe (51) der Öffnungsgrad der Einlassöffnungen (55) verändert wird;
- ein kinematischer Betätigungsmechanismus (70), der mechanisch mit dem Einstellelement (60) verbunden ist, mit einem Hebel zum Einstellen des Wasserhahns verbunden werden kann und ausgebildet ist, um die Bewegung des Einstellelements (60) mit Bezug auf die Basisscheibe (51) zu lenken;
wobei die Mischkammer (40) zwischen dem Einstellelement (60) und der Basisscheibe (51) bestimmt ist,
wobei der kinematische Betätigungsmechanismus (70) oberhalb des Einstellelements (60) in einer Trockenkammer (80) angeordnet ist, die hermetisch gegenüber der Mischkammer (40), den Einlässen (31, 32) und dem Abgabeauslass (33) isoliert ist; wobei die Mischkammer (40) über mindestens eine Leitung für das Ausströmen von Mischwasser (90), die innerhalb des Aufnahmegehäuses (20) und außerhalb der Trockenkammer (80) liegt, in Fluidaustausch mit dem Abgabeauslass (33) steht, so dass das Wasser nicht in Kontakt mit dem kinematischen Betätigungsmechanismus (70) kommt; **dadurch gekennzeichnet, dass** der kinematische Betätigungsmechanismus (70) in der Richtung des Abgabeauslasses (33) oberhalb des Einstellelements (60) untergebracht ist; wobei das Einstellelement (60) Folgendes umfasst:
- eine untere Scheibe (61), die an die Basisscheibe (51) angrenzt, auf ihr gleiten kann und die Mischkammer (40) in Umfangsrichtung begrenzt, und
- eine obere Scheibe (62), die an der unteren Scheibe (61) über ihr befestigt ist und in einem oberen Bereich die Mischkammer (40) begrenzt, wobei die Trockenkammer (80) zumindest teilweise von einer wasserdichten Wand (88) umgeben ist, die den Betätigungsmechanismus (70) vor Wasser und außerdem das Einstellelement (60) und die Basisscheibe (51) schützt.

2. Die Mischkartusche (1) gemäß Anspruch 1, **dadurch gekennzeichnet, dass** die Mischkammer (40) durch eine Innenwand (66) des Einstellelements (60) bestimmt ist, die die Mischkammer (40) von der Trockenkammer (80) trennt; wobei das Einstellelement (60) innerhalb der Trockenkammer (80) derart beweglich ist, dass mindestens eine Außenwand (67) des Einstellelements (60) nicht mit dem Wasser in Kontakt kommt.

3. Die Mischkartusche (1) gemäß Anspruch 1 oder 2, **dadurch gekennzeichnet, dass** die Basisscheibe (51) in der Trockenkammer (80) untergebracht ist, so dass mindestens eine Außenwand der Basisscheibe (51) nicht mit dem Wasser in Kontakt kommt.

4. Die Mischkartusche (1) gemäß einem oder mehreren der obigen Ansprüche, **dadurch gekennzeichnet, dass** das Einstellelement (60) einen Verbindungssitz (68) umfasst, in welchen ein Ende (77) des kinematischen Betätigungsmechanismus (70) eingreift.

5. Die Mischkartusche (1) gemäß einem oder mehreren der obigen Ansprüche, **dadurch gekennzeichnet, dass** die Basisscheibe (51) eine Auslassöffnung (56) für das Ausströmen des Mischwassers aus der Mischkammer (40) umfasst, die die Mischkammer (40) mit der mindestens einen Leitung für das Ausströmen des Mischwassers (90) verbindet.

6. Die Mischkartusche (1) gemäß einem oder mehreren der obigen Ansprüche, **dadurch gekennzeichnet, dass** die mindestens eine Leitung für das Ausströmen von Mischwasser (90) mindestens einen Längszweig (91) umfasst, welcher zwischen einer Innenwand des Aufnahmegehäuses (20) und einer Außenwand der Trockenkammer (80) bestimmt ist.

7. Die Mischkartusche (1) gemäß einem oder mehreren der obigen Ansprüche, **dadurch gekennzeichnet, dass** die mindestens eine Leitung für das Ausströmen des Mischwassers (90) mindestens einen transversalen Zweig (92) umfasst, der in einem unteren Verschlusselement (29) bestimmt ist, welches sich unterhalb der Basisscheibe (51) befindet.

8. Die Mischkartusche (1) gemäß einem oder mehreren der obigen Ansprüche, **dadurch gekennzeichnet, dass** der kinematische Betätigungsmechanismus (70) einen Hebel (71) umfasst, der drehgelenkig um zwei zueinander senkrechte Achsen innerhalb der Trockenkammer (80) angeordnet ist.

9. Die Mischkartusche (1) gemäß Anspruch 8, **dadurch gekennzeichnet, dass** der kinematische Betätigungsmechanismus (70) auch ein Verbindungselement (72) umfasst, welches mit dem Hebel (71) gekoppelt ist, um ihn durch Drehung mitzunehmen, wobei das Verbindungselement (72) mit einem Verbindungsabschnitt (79) aus einem Fenster (23) des Aufnahmegehäuses (20) hinaus weist; wobei der Verbindungsabschnitt (79) ausgebildet ist, um mit einem äußeren Einstellhebel eines Wasserhahns verbunden zu werden.

## Revendications

1. Cartouche de mélange (1) pour robinets comprenant :
une enveloppe de confinement (20) ;
une entrée d'eau chaude (31) et une entrée d'eau froide (32), les deux positionnées sur une première face d'extrémité (21) de ladite enveloppe de confinement (20) et les deux débouchant dans une chambre de mélange (40) ;
une sortie de distribution (33), qui est en communication de fluide avec ladite chambre de mélange (40) et est agencée sur une seconde face d'extrémité (22) de ladite enveloppe de confinement (20) qui est opposée par rapport à ladite première face d'extrémité (21) ;
un disque de base (51) intercalé entre lesdites entrées (31, 32) et ladite chambre de mélange (40) et comprenant une paire d'orifices d'entrée (55), dont chacun établit une communication de fluide entre l'une desdites entrées (31, 32) et ladite chambre de mélange (40) ;
un élément de réglage (60) qui est superposé sur ledit disque de base (51) et peut se déplacer par rapport audit disque de base (51) de sorte qu'en se déplaçant par rapport audit disque de base (51), le degré d'ouverture desdits orifices d'entrée (55) est modifié ;
un mécanisme cinématique d'actionnement (70) raccordé, mécaniquement, audit élément de réglage (60), qui peut être raccordé à un levier pour régler le robinet et est configuré pour guider le mouvement dudit élément de réglage (60) par rapport audit disque de base (51) ;
ladite chambre de mélange (40) étant définie entre ledit élément de réglage (60) et ledit disque de base (51),
ledit mécanisme cinématique d'actionnement (70) étant logé au-dessus dudit élément de réglage (60) dans une chambre sèche (80) qui est hermétiquement isolée de ladite chambre de mélange (40) et desdites entrées (31, 32) et de ladite sortie de distribution (33), ladite chambre de mélange (40) étant en communication de fluide avec ladite sortie de distribution (33) via au moins un conduit pour la sortie de l'eau mélangée (90), qui est à l'intérieur de ladite enveloppe de confinement (20) et est à l'extérieur de ladite chambre sèche (80), de sorte que l'eau ne vient pas en contact avec ledit mécanisme cinématique d'actionnement (70), **caractérisée en ce que** ledit mécanisme cinématique d'actionnement (70) est logé au-dessus dudit élément de réglage (60) le long de la direction de la sortie de distribution (33), ledit élément de réglage (60) comprenant :
un disque inférieur (61) qui est adjacent audit disque de base (51) et peut coulisser sur ce dernier et délimite, de manière circonférentielle, ladite chambre de mélange (40), et
un disque supérieur (62) qui est fixé sur ledit disque inférieur (61), au-dessus de ce dernier, et dans une région supérieure, délimite ladite chambre de mélange (40), ladite chambre sèche (80) étant au moins partiellement entourée par une paroi étanche à l'eau (88) qui protège le mécanisme d'actionnement (70) de l'eau et également l'élément de réglage (60) et le disque de base (51).

2. Cartouche de mélange (1) selon la revendication 1, **caractérisée en ce que** ladite chambre de mélange (40) est définie par une paroi interne (66) dudit élément de réglage (60) qui sépare ladite chambre de mélange (40) de ladite chambre sèche (80) ; ledit élément de réglage (60) étant mobile à l'intérieur de ladite chambre sèche (80) de sorte qu'au moins une paroi externe (67) dudit élément de réglage (60) ne vient pas en contact avec l'eau.

3. Cartouche de mélange (1) selon la revendication 1 ou 2, **caractérisée en ce que** ledit disque de base (51) est logé à l'intérieur de ladite chambre sèche (80) de sorte qu'au moins une paroi externe dudit disque de base (51) ne vient pas en contact avec l'eau.

4. Cartouche de mélange (1) selon une ou plusieurs des revendications précédentes, **caractérisée en ce que** ledit élément de réglage (60) comprend un siège de raccordement (68) qui est mis en prise par une extrémité (77) dudit mécanisme cinématique d'actionnement (70).

5. Cartouche de mélange (1) selon une ou plusieurs des revendications précédentes, **caractérisée en ce que** ledit disque de base (51) comprend un orifice de sortie (56) pour la sortie de l'eau mélangée de la chambre de mélange (40), qui raccorde ladite chambre de mélange (40) avec ledit au moins un conduit pour la sortie de l'eau mélangée (90).

6. Cartouche de mélange (1) selon une ou plusieurs des revendications précédentes, **caractérisée en ce que** ledit au moins un conduit pour la sortie de l'eau mélangée (90) comprend au moins une branche longitudinale (91) qui est définie entre une paroi interne de ladite enveloppe de confinement (20) et une paroi externe de ladite chambre sèche (80).

7. Cartouche de mélange (1) selon une ou plusieurs des revendications précédentes, **caractérisée en ce que** ledit au moins un conduit pour la sortie de l'eau mélangée (90) comprend au moins une branche transversale (92) qui est définie à l'intérieur d'un élément de fermeture inférieur (29) qui est positionné au-dessous dudit disque de base (51).

8. Cartouche de mélange (1) selon une ou plusieurs des revendications précédentes, **caractérisée en ce que** ledit mécanisme cinématique d'actionnement (70) comprend un levier (71) qui est pivoté à l'intérieur de ladite chambre sèche (80) de sorte qu'il peut tourner autour de deux axes mutuellement perpendiculaires.

9. Cartouche de mélange (1) selon la revendication 8, **caractérisée en ce que** ledit mécanisme cinématique d'actionnement (70) comprend également un élément de raccordement (72) qui est couplé audit levier (71) afin de l'entraîner en rotation, ledit élément de raccordement (72) étant orienté vers l'extérieur, avec une partie de raccordement (79), d'une fenêtre (23) de ladite enveloppe de confinement (20) ; ladite partie de raccordement (79) étant adaptée pour être raccordée à un levier de réglage externe d'un robinet.
